# EUROPÄISCHE PATENTSCHRIFT

(11) **EP 1 926 563 B1**
(45) Veröffentlichungstag und Bekanntmachung des Hinweises auf die Patenterteilung: **21.09.2011**
(21) Anmeldenummer: 06754314.0
(22) Anmeldetag: 13.06.2006
(51) Int. Cl.: B05D 5/08, C23C 22/12, B32B 15/01, F16C 33/12, F16C 33/20

(54) **GLEITLAGERVERBUNDWERKSTOFF**
COMPOSITE ANTIFRICTION BEARING MATERIAL
MATERIAU COMPOSITE DE PALIER A GLISSEMENT

(30) Priorität: 20.09.2005 DE 102005045701
(43) Veröffentlichungstag der Anmeldung: 04.06.2008
(73) Patentinhaber: KS Gleitlager GmbH, 68789 St. Leon-Rot (DE)
(72) Erfinder: SCHUBERT, Werner, 69168 Wiesloch (DE); GERLACH, Friedhelm, 26810 Westoverledingen (DE); CASPERS, Gerhard, 76669 Bad Schönborn (DE); SEREMETI, Megjit, 26871 Papenburg (DE); REHBOCK, Bernhard, 26871 Papenburg (DE)
(74) Vertreter: Friz, Oliver
(86) Internationale Anmeldenummer: PCT/EP2006/005632
(87) Internationale Veröffentlichungsnummer: WO 2007/033709

(56) Entgegenhaltungen:
- EP-A- 0 059 273
- WO-A-2004/092602
- DE-A1- 10 360 818
- GB-A- 2 337 306
- US-A- 5 209 578
- US-A1- 2005 181 194

## Beschreibung

Die Erfindung betrifft einen Gleitlagerverbundwerkstoff zur Herstellung von Gleitlagerelementen, insbesondere Gleitlagerbuchsen und Gleitlagerschalen für motorische Anwendungen, mit einer Trägerschicht aus Stahl und einer darauf aufgebrachten Lagermetallschicht auf Kupferbasis, insbesondere Kupfer-Zinn oder Kupfer-Zink-Basis, und mit einer auf die Lagermetallschicht aufgesputterten Laufschicht auf Aluminiumbasis.

Gleitlagerverbundwerkstoffe der vorstehend geschilderten Art mit einer aufgesputterten Laufschicht auf Aluminiumbasis sind mehrfach bekannt, beispielsweise aus DE 103 60 818 A. Durch Vorsehen einer Sputterschicht auf der tragenden Lagermetallschicht wird eine hohe Härte und Verschleißbeständigkeit des Gleitlagerverbundwerkstoffs und eines hieraus hergestellten Gleitelements erreicht.

Wenn eingangs von Gleitlagerbuchsen die Rede ist, so werden hierunter zwar grundsätzlich jegliche gerollten Gleitlagerbuchsen für an sich beliebige Gleitlageranwendungen verstanden. Der genannte Gleitlagerverbundwerkstoff eignet sich jedoch in besonderem Maße zur Herstellung von hochbelasteten Pleuellagerbuchsen, also Buchsen für die Lagerung des Kolbenbolzens im kleinen Pleuelauge eines Motorpleuels. Dort ist die Gleitlagerbuchse extremen Temperaturen und Belastungen, jedoch eher moderaten Gleitgeschwindigkeiten ausgesetzt.

Wenn vorstehend von Gleitlagerschalen für motorische Anwendungen die Rede ist, so werden hierunter üblicherweise auf Halbkreisform gebogene Schalen für geteilte Lagerstellen verstanden, im besonderen für die Lagerung des Pleuels am Kurbelzapfen oder der Kurbelwelle im Kurbelgehäuse bei einer Brennkraftmaschine. Bei diesen Anwendungen sind die Betriebstemperaturen geringer als bei Pleuellagerbuchsen. Die Gleitgeschwindigkeiten sind dem gegenüber aber beträchtlich höher.

Obschon Gleitlagerverbundwerkstoffe mit aufgesputterten Gleit- oder Laufschichten für höchste Belastungen im Betrieb von Brennkraftmaschinen geeignet sind, besteht noch Potential für Verbesserungen im Hinblick auf das Einlaufverhalten, wenn sich also die Paarung aus Gleitlagerelement und Gleitpartner aufeinander einstellen. Auch im Betrieb unter Mangelschmierung sind noch Verbesserungen möglich.

Der vorliegenden Erfindung liegt daher die Aufgabe zugrunde, das Einlaufverhalten von Gleitlagerverbundwerkstoffen mit harten aufgesputterten Laufschichten zu verbessern.

Diese Aufgabe wird mit den Merkmalen des Anspruchs 1 gelöst durch einen Gleitlagerverbundwerkstoff

Es wird also erfindungsgemäß vorgeschlagen, die aufgesputterte Laufschicht, welche höchsten Anforderungen an eine tribologisch günstige Oberflächenbeschaffenheit gerecht wird, nicht direkt für einen Kontakt mit dem Gleitpartner vorzusehen, sondern auf dieser harten Laufschicht die zusätzliche Einlaufschicht vorzusehen.

Wenn erfindungsgemäß eine zink-Phosphat-Schicht auf oder bei der aufgesputterten Lauf schicht ausgebildet wird, so kann dies durch Eintauchen des Gleitlagerverbundwerkstoffs beziehungsweise der vorzugsweise schon auf Endform gebrachten Gleitlagerelemente, insbesondere Gleitlagerbuchsen und Gleitlagerschalen, in eine Phosphatierungslösung erreicht werden, wie dies grundsätzlich schon aus EP 0 399 425 B1 bekannt ist.

Des Weiteren ergeben sich bevorzugte Zusammensetzungen der Lagermetallschicht und der Laufschicht aus den beigefügten Patentansprüchen.

## Patentansprüche

1. Gleitlagerverbundwerkstoff zur Herstellung von Gleitlagerelementen, insbesondere Gleitlagerbuchsen und Gleitlagerschalen für motorische Anwendungen, mit einer Trägerschicht aus Stahl und einer darauf aufgebrachten Lagermetallschicht auf Kupferbasis, insbesondere Kupfer-Zinn oder Kupfer-Zink-Basis, und mit einer auf die Lagermetallschicht aufgesputterten Laufschicht auf Aluminiumbasis, wobei die Laufschicht von einer Aluminium-Zinn-Legierung mit 20 - 30 Gew.-% Sn gebildet ist, **dadurch gekennzeichnet, dass** auf die aufgesputterte Laufschicht eine zusätzliche Einlaufschicht aufgebracht ist, die eine auf der Oberfläche der Laufschicht ausgebildete Zink-Phosphat-Schicht einer Dicke von 1 - 5 µm ist.

2. Gleitlagerverbundwerkstoff nach Anspruch 1, **dadurch gekennzeichnet, dass** die Lagermetallschicht eine Kupfer-Zink-Legierung mit 10 - 32 Gew.-% Zn, insbesondere mit 10 - 25 Gew.-% Zn, und insbesondere mit 1 - 8 Gew.-% Ni ist.

3. Gleitlagerverbundwerkstoff nach Anspruch 1 oder 2, **dadurch gekennzeichnet, dass** die Lagermetallschicht bleifrei ausgebildet ist.

4. Gleitlagerverbundwerkstoff nach einem der vorstehenden Ansprüche, **dadurch gekennzeichnet, dass** die Härte der Lagermetallschicht 110 - 150 HV 0,002, insbesondere 110 - 140 HV 0,002, insbesondere 110 - 130 HV 0,002 beträgt.

5. Gleitlagerverbundwerkstoff nach einem der vorstehenden Ansprüche, **dadurch gekennzeichnet, dass** die Laufschicht von einer Aluminium-Zinn-Legierung mit 20 - 26 Gew.-% Sn gebildet ist.

6. Gleitlagerverbundwerkstoff nach Anspruch 5, **dadurch gekennzeichnet, dass** die Aluminium-Zinn-Legierung jeweils bis zu 2 Gew.-% Ni, Si, Mn und verunreinigungsbedingte Bestandteile bis jeweils 0,5 Gew.-% in der Summe jedoch nicht mehr als 1 Gew.-% umfasst.

7. Gleitlagerverbundwerkstoff nach Anspruch 5 oder 6, **dadurch gekennzeichnet, dass** die Aluminium-Zinn-Legierung die Zusammensetzung AlSn(20-30)Cu(2,3-2,8), insbesondere AlSn(23-27)Cu(2,3-2,8), oder AlSn20Cu aufweist.

8. Gleitlagerschale, hergestellt aus einem Gleitlagerverbundwerkstoff nach einem oder mehreren der vorstehenden Ansprüche.

9. Verwendung einer Gleitlagerschale nach Anspruch 8 als Pleuellagerschale oder als Kurbelwellenlagerschale bei einem Verbrennungsmotor.

10. Gleitlagerbuchse, hergestellt aus einem Gleitlagerverbundwerkstoff nach einem oder mehreren der vorstehenden Ansprüche 1-7.

11. Verwendung einer Gleitlagerbuchse nach Anspruch 10 als Pleuellagerbuchse bei einem Verbrennungsmotor.

## Claims

1. Sliding bearing composite material for manufacturing sliding bearing elements, particularly sliding bearing bushes and sliding bearing shells for motor applications, with a carrier layer of steel and a copper-based bearing metal layer applied thereon, in particular copper-tin or copper-zinc based, and with an aluminum-based running layer sputtered on the bearing metal layer, wherein the running layer is formed by an aluminum-tin alloy with 20-30% by weight tin, **characterized in that** an additional run-in layer is applied to the sputtered running layer, the run-in layer being a zinc-phosphate layer having a thickness of 1-5 µm formed on the surface of the running layer.

2. Sliding bearing composite material according to claim 1, **characterized in that** the bearing metal layer is a copper-zinc alloy with 10 - 32 % by weight zinc, particularly with 10 -25 % by weight zinc, and particularly with 1 - 8 % by weight nickel.

3. Sliding bearing composite material according to claim 1 or 2, **characterized in that** the bearing metal layer is lead-free.

4. Sliding bearing composite material according to one of the preceding claims, **characterized in that** the hardness of the bearing metal layer amounts to 110 - 150 HV 0,002, particularly 110 - 140 HV 0,002, particularly 110 - 130 HV 0,002.

5. Sliding bearing composite material according to one of the preceding claims, **characterized in that** the running layer is an aluminum-tin alloy with 20 - 26 % by weight tin.

6. Sliding bearing composite material according to claim 5, **characterized in that** the aluminum tin alloy includes Ni, Si, Mn each up to 2 % by weight and impurity caused components each up to 0,5 % by weight but in the sum not more than 1 % by weight.

7. Sliding bearing composite material according to claim 5 or 6, **characterized in that** the aluminum tin alloy is having the composition AlSn(20-30)Cu(2,3-2,8), particularly AlSn(23-27)Cu(2,3-2,8) or AlSn20Cu.

8. Sliding bearing shell made of a sliding bearing composite material according to one or more of the preceding claims.

9. Application of a sliding bearing shell according to claim 8 as a connecting rod bearing shell or as a crankshaft bearing shell in an internal combustion engine.

10. Sliding bearing bush made of a sliding bearing composite material according to one or more of the preceding claims 1-7.

11. Application of a sliding bearing bush according to claim 10 as a connecting rod bearing bush in an internal combustion engine.

## Revendications

1. Matériau composite pour paliers à glissement, destiné à la fabrication d'éléments de paliers à glissement, en particulier de coussinets lisses et de coquilles de coussinets lisses pour des applications dans des moteurs, comprenant une couche support en acier et, déposée sur celle-ci, une couche de métal antifriction à base de cuivre, en particulier à base de cuivre et d'étain ou à base de cuivre et de zinc, et comprenant une couche de roulement à base d'aluminium déposée par pulvérisation cathodique sur la couche de métal antifriction, ladite couche de roulement étant formée d'un alliage d'aluminium et d'étain contenant de 20 à 30 % en poids de Sn, **caractérisé en ce qu'**une couche de rodage supplémentaire, consistant en une couche de phosphate de zinc de 1 à 5 µm d'épaisseur formée sur la surface de la couche de roulement, est appliquée sur la couche de roulement déposée par pulvérisation cathodique.

2. Matériau composite pour paliers à glissement selon la revendication 1, **caractérisé en ce que** la couche de métal antifriction est constituée d'un alliage de cuivre et de zinc contenant de 10 à 32 % en poids de Zn, en particulier de 10 à 25 % en poids de Zn, et contenant en particulier de 1 à 8 % en poids de Ni.

3. Matériau composite pour paliers à glissement selon la revendication 1 ou la revendication 2, **caractérisé en ce que** la couche de métal antifriction est formée sans adjonction de plomb.

4. Matériau composite pour paliers à glissement selon l'une des revendications précédentes, **caractérisé en ce que** la dureté de la couche de métal antifriction se situe dans la plage de 110 à 150 HV 0,002, en particulier de 110 à 140 HV 0,002 et plus particulièrement de 110 à 130 HV 0,002.

5. Matériau composite pour paliers à glissement selon l'une des revendications précédentes, **caractérisé en ce que** la couche de roulement est constituée d'un alliage d'aluminium et d'étain contenant de 20 à 26 % en poids de Sn.

6. Matériau composite pour paliers à glissement selon la revendication 5, **caractérisé en ce que** l'alliage d'aluminium et d'étain contient jusqu'à 2 % en poids de chacun des éléments Ni, Si et Mn, ainsi que des constituants correspondant à des impuretés jusqu'à 0,5 % en poids de chaque mais avec un maximum de 1 % en poids au total.

7. Matériau composite pour paliers à glissement selon la revendication 5 ou la revendication 6, **caractérisé en ce que** l'alliage d'aluminium et d'étain présente la composition AlSn(20-30)Cu(2,3-2,8), en particulier AlSn(23-27)Cu(2,3-2,8), ou AlSn20Cu.

8. Coquille de coussinet lisse fabriquée à partir d'un matériau composite pour paliers à glissement selon l'une ou plusieurs des revendications précédentes.

9. Utilisation d'une coquille de palier lisse selon la revendication 8 comme coquille de coussinet de bielle ou comme coquille de coussinet de vilebrequin dans un moteur à combustion interne.

10. Coussinet lisse fabriqué à partir d'un matériau composite pour paliers à glissement selon l'une ou plusieurs des revendications 1 à 7.

11. Utilisation d'un coussinet lisse selon la revendication 10 comme coussinet de bielle dans un moteur à combustion interne.
